# EUROPEAN PATENT APPLICATION

(11) **EP 3 150 984 A1**
(43) Date of publication of application: **05.04.2017**
(21) Application number: 15187712.3
(22) Date of filing: 30.09.2015
(51) Int. Cl.: G01M 5/00, G01N 27/20

(54) **DAMAGE ASSESSMENT IN MARINE VEHICLES BY USING CONDUCTIVE NANOPARTICLES**

(71) Applicant: Istanbul Universitesi Teknoloji Transfer Uygulama ve Arastirma Merkezi, 34320 Istanbul (TR); Aktas, Alaattin, 34320 Istanbul (TR); Bal Demirci, Tülay, Instanbul (TR); Duran, Fatih, 34320 Istanbul (TR); Gürkan, Koray, 34320 Istanbul (TR); Güclü, Mehmet, 34320 Istanbul (TR)
(72) Inventor: Aktas, Alaattin, 34320 Istanbul (TR); Bal Demirci, Tülay, 34320 Istanbul (TR); Duran, Fatih, 34320 Istanbul (TR); Gürkan, Koray, 34320 Istanbul (TR); Güclü, Mehmet, 34320 Istanbul (TR)
(74) Representative: Mutlu, Aydin

(57) **Abstract**

The present invention relates to a system which ensures damage assessment in marine vehicles and to a manufacturing method of this system. The system presented in the scope of the invention basically comprises a conductive composite layer comprising fibers exposed to a polymeric resin having electrically conductive nanoparticles, wherein at least an inner electrode is embedded into this layer; an insulating layer covering said surface layers is applied and also over this, an outer electrode is provided in an area wherein the marine vehicle is in contact with the water. Said inner and outer electrodes are connected to a power supply and therefore a continuous resistance measurement is made. There is also provided within the system a control unit measuring the resistance and generating an electrical signal in case of that said unit measures a resistance value below a predetermined threshold resistance value, and a warning means which converts the electrical signal generated by said control unit into a warning signal.

## Description

The present project is supported by TUBITAK.

### Technical Field of the Invention

The present invention relates to a system which allows damage assessment in marine vehicles such as yachts or boats made from a polymer composite material. The present invention is particularly related to a system which can perform critical damage assessment by means of electrical conductivity dependent measurement methods in the marine vehicles made from the composite material comprising a matrix formed by electrically conductive nanoparticles.

### Background of the Invention

Composite materials have a large usage areas in maritime sector because of their features such as high energy storage capacity, high strength, low weight, excellent corrosion resistance and easy formability features. In such cases that they provide the same strength compared to the conventional materials such as aluminum, iron, steel and so on, they provide a lighter structure at a rate of %65-80. These features allow producing yachts, boats, ships, canoes, speedboats, etc. as the lighter marine vehicles and therefore production of more efficient marine vehicles is ensured.

Body parts of marine vehicles, their components which supply visual aesthetic, and their parts which are required to be of higher strength have been generally manufactured from composite materials within the current state of the technology. The most commonly used composite materials are classified as Carbon Fiber, Glass Fiber, Kevlar and Hybrid Fiber Reinforced composite materials according to the reinforcement material. They are classified as Polyester, Epoxy and Vinyl Ester according to the matrix materials. Mostly Glass Fibers and Polyester Matrices are preferred because of their low costs.

Marine vehicles are exposed to extra forces and impacts while sailing and cruising because of the reasons like waves, sea animals, rocks, and objects on the sea surface. These forces and impacts cause damages on the body and/or parts of the marine vehicles. In addition, the damages occurred in internal structure of the composite material is not the type which starts from the surface contrary to those in the steels, they are the types of damages which are invisible and occurred in the internal structure like matrix cracking, fiber breakage and delamination. These damages cannot be determined while sailing and cruising. However, the damages occurred in the vehicles can be discovered by using nondestructive testing methods in shipyard conditions.

The fundamental problem which the present invention aims to solve is that a damage which was occurred or would be occurred in the parts of marine vehicles like body, rudder frame, centerboard, etc. manufactured from composite materials cannot be determined. It is aimed to determine the damage in real time with the present invention, which was occurred or would be occurred in the structures manufactured from composite materials, while the vehicle is cruising.

The patent document US 8,800,665 B2 discloses an application which is manufactured by using carbon fiber in order to increase the strength of the submarine pipes used in gas and oil extraction applications and capable of active damage assessment by using piezoelectric materials. Said study is directed to a system allowing detection of the damage by tensile differences occurred in the material by means of a piezoelectric sensor embedded in the material. In addition, the damage assessment is not performed in the marine vehicles in said document, instead it is realized in submarine drill pipes.

However, the present invention is directed to a system allowing determination of the damage in real time occurred in the composite parts like body, rudder frame, centerboard, etc., while the vehicle is cruising. Said damage is determined by measuring the changes occurred in electrical resistance depending on loadings, fiber breakage, delamination and matrix breakage with the help of electronic circuits. The present invention allows real time determination of the measurement of electrical conductivity generated by damage dependent change occurred in the arrangement of nanoparticles.

When any damage is occurred in the body and/or in the parts, marine vehicle users are warned real time by the system and it is ensured to take precautions by means of the present invention. This provides advantages with respect to prevention of complete or larger breakage of the body and/or other parts and to prevention of more costly repair processes as well as prevention of occurrence of dangerous situations.

It is possible to detect the damages at each point of the material as a whole because the polymer matrix structure formed with highly conductive nanoparticles is distributed uniformly on the surface of the material.

### Brief Description of the Invention

The present invention is related to a damage assessment system for use in marine vehicles manufactured from polymer composite or fibers. Said damage assessment system basically comprises;
- a composite layer (8) comprising fiber mixed with a polymeric resin having electrically conductive nanoparticles,
- at least one inner electrode (10) embedded in said conductive composite layer (8),
- at least one insulating layer (5) on said conductive composite layer (8),
- at least one outer electrode (2) embedded in this insulating layer (5) or in a final layer (1) on this, being positioned in an area where the marine vehicle is in contact with the water,
- a power supply (11) connected to said outer electrode (2) and the inner electrode (10),
- a control unit measuring the resistance between said inner electrode (10) and the outer electrode (2) and generating an electrical signal in case of that said resistance is below a predetermined threshold value,
- a warning means converting the electrical signal generated by the control unit into a warning signal.

Possible damages, which may occur, are detected immediately by continuously observing any desired region of a marine vehicle, especially a region which is under the water by means of this system. In a preferred form of the invention, said damage assessment system also comprises at least another composite layer (7) under said conductive composite layer (8) and an electrode (9) embedded in this conductive layer. In this case, there is also provided at least one insulating layer (6) ensuring electrical insulation between said conductive layers (7, 8). Therefore, the size of the damage can be determined besides the damage assessment.

In the damage assessment system of the invention, the inner electrodes (9, 10) and the outer electrode positioned in the conductive composite layers (7, 8) are connected to an electrical power supply (1). The aforesaid final layer is preferably gelcoat as known by the skilled person in the art (gelcoat®). Said nanoparticles on the other hand are selected from a group consisting of carbon fiber, carbon nanotube and graphite commonly known in the prior art. Said polymeric resin is preferably selected from polyester, epoxy and vinyl ester resins. Preferably, the fiber used in the conductive composite layers (7, 8) may be glass fiber or kevlar. It is an advantage to have constant current generator as the power supply (11) in order to receive correct resistance measurements.

In another aspect, the invention is related to a method for later application of above identified damage assessment system to currently available marine vehicles. Said method comprises the steps of;
- homogenizing nanoparticles having electrical conductivity in a polymeric resin,
- producing a composite material by applying the mixture to a fiber material,
- forming at least an electrical conductive composite layer (8) by way of applying said composite material to the marine vehicle,
- embedding at least an inner electrode (10) into said layer (8),
- producing an insulating layer (5) by application of an insulating polymeric matrix material on said coating (8),
- embedding at least an outer electrode (2) into said insulating layer (5) or into a final layer (1) which may optionally be applied thereon,
- connecting a power supply (11) so as to generate a circuit between the electrode (10) in the electrically conductive composite layer (8) and said outer electrode (2),
- connecting a control unit for measuring the resistance of the circuit and generating an electrical signal when the resistance measured is below a predetermined threshold value, and
- providing a warning means generating a warning signal based on an electrical signal generated by said control unit.

In another aspect, the invention relates to a method for manufacturing a marine vehicle comprising above damage assessment system. Said method comprises the steps of;
- applying a polymeric matrix material which constitutes the insulating layer (5) onto a marine vehicle mold wherein a final layer (1) material is preferably applied onto the mold before applying the polymeric matrix material,
- embedding at least one outer electrode (2) into said final layer and/or the insulating layer (5) in an area where the marine vehicle gets into contact with the water,
- homogenizing electrically conductive nanoparticles in a polymeric resin, forming a composite material by means of applying the mixture into a fiber material and forming at least a composite layer (8) whose electrical conductivity is obtained by means of application of said composite material onto the marine vehicle,
- embedding at least one electrode (10) into said composite layer (8),
- connecting a power supply (11) so as to generate a circuit between the electrode (10) in the electrically conductive composite layer (8) and said outer electrode (2),
- connecting a control unit for measuring the resistance of the circuit and generating an electrical signal when the resistance measured is below a predetermined threshold value, and
- providing a warning means generating a warning signal based on an electrical signal generated by said control unit.

In manufacturing of said conductive composite layers (7, 8) in the context of the present invention, various methods as widely known in the current state of the art can be used, such as hand lay-up method, wet lay-up method, spraying method, vacuum infusion method, and vacuum bagging method.

### Brief Description of the Figures

Figure 1 is a detailed view of surface layers of a part of the composite marine vehicle according to the invention on which damage points are located.
Figure 2 is a representative view of the electrodes embedded into the surface layers of a part of the composite marine vehicle according to the present invention
Figure 3 a representative view of the surface layers of a part of the composite marine vehicle according to the invention in the sea water on which damage points are located.
Figure 4 is a representative view of electrical connection diagram applied to the surface layers of a part of the composite marine vehicle according to the invention

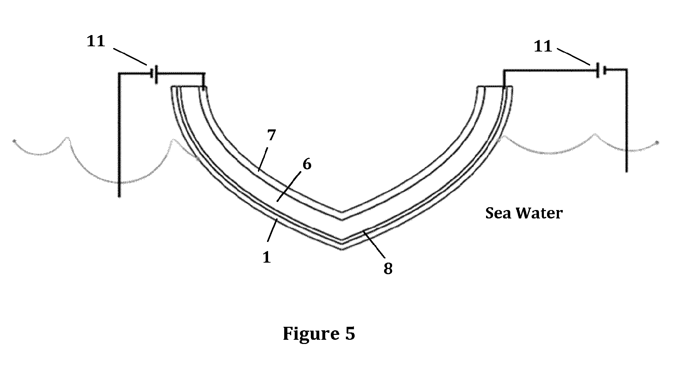

Figure 5 is a representative view of electrical connection diagram applied to the body of a composite marine vehicle according to the invention within the sea water.

### Description of the References

1. Final layer/Gelcoat layer
2. Outer electrode
3. Possible minor damage
4. Possible heavy damage
5. Insulating layer
6. Insulating layer between the conductive layers
7. Conductive composite layer
8. Other conductive composite layer
9. Inner electrode embedded into the conductive composite layer (7)
10. Inner electrode embedded into the conductive composite layer (8)
11. Power supply

### Detailed Description of the Invention

Marine vehicles are exposed to forces and impacts caused by different reasons while they are cruising and sailing. Said forces and impacts cause damages in the structure of marine vehicles. Composite materials are one of the ideal materials in manufacture of marine vehicles and commonly preferred to be used because they have high energy storage capacity, low weight, and excellent corrosion resistance. However, internal structure damages such as matrix cracking, fiber breakage and delamination are occurred suddenly or over time in the marine vehicles manufactured from composite materials due to the impact of various forces and damages. Polymer matrix is three-dimensional and composed of large molecules fused to one another. Cracks and breakages in said matrix are occurred in three-dimensions, namely in the transverse, longitudinal and vertical directions and said cracks can progress further in time. It is very important to detect these damages before they cause bigger damages.

Composite marine vehicles and the parts of marine vehicles manufactured in the maritime sector are manufactured with the methods like hand lay-up method, wet lay-up method, spraying method, vacuum infusion method, and vacuum bagging method.

There is hereby developed a structure and a warning system comprising this structure which are specifically produced for detection of damages occurring in nanoparticle-reinforced marine vehicles before they reach to a critical level. Said warning system allows to predetermine the damages occurred in fiber reinforced polymer composite marine vehicles. "Nanoparticles" are used for electrical conductivity in the body or other parts of the marine vehicles of the present invention. A conductive matrix material is generated by mixing electrically conductive nanoparticles in a polymer resin homogeneously in suitable proportions. The polymer resin is a thermoset or a thermoplastic polymer, and it is preferably selected from polyester, epoxy and vinyl ester resin.

"Nanoparticles" in the scope of the invention refer to carbon fibers, carbon nanotubes graphite or combinations thereof having electrical conductivity. Said nanoparticles are preferably carbon fibers having electrical conductivity.

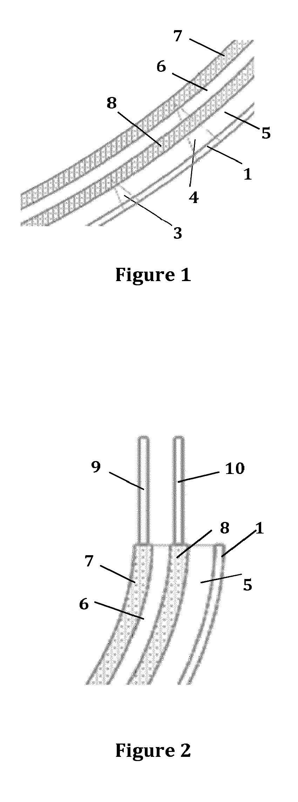

According to one embodiment of the present invention, it is possible to adapt the damage assessment system of the present invention later to an existing marine vehicle. Accordingly, a matrix material comprising nanoparticles is applied to outer body of the marine vehicle with a method of spraying or painting, and an electrically conductive composite layer (8) is formed on the vehicle body. As shown in Figure 1, at least an inner electrode (10) is embedded into this conductive layer and then an insulating layer (5) is applied onto the conductive layer (8). A final layer may be applied onto this insulating layer (5), preferably a gelcoat layer (1) may be applied. At least an outer electrode (2) is provided in said final layer (1) and/or in the area wherein the insulating layer (5) is in contact with the water. In a preferred form of this embodiment, before forming said conductive layer (8), at least another conductive layer (7) is formed and an inner electrode (9) is embedded thereto. In this manner, the conductive layers (7,8) are isolated electrically by applying at least an insulating layer (6) onto said conductive composite layer (7). AC or DC voltage is applied to the inner electrodes (9, 10). Initially, there will not be electrical conductivity since there is an insulating material between the inner and the outer electrodes. In case of a possible damage, an electrical current will be occurred between electrodes because the sea water is salty and therefore a decrease in resistance occurs. It is designed to alert the user via sound, light or SMS because of that resistance decrease measured by an electrical system which is integrated with a warning system.

According to another embodiment of the present invention, a gelcoat layer (1) is formed preferably by applying gelcoat to a marine vehicle mold wherein a new marine vehicle will be manufactured and at least an outer electrode (2) is located so as to be in this layer (Figure 2). An insulating layer (5) is applied to this layer until reaching the desired thickness irrespective of the manufacturing method. Said outer electrode (2) may be embedded into this insulating layer (5) in case the final layer (1) with gelcoat is not applied. Then a conductive composite layer (8) comprising conductive nanoparticles is applied to the insulating layer (5) until reaching the desired thickness and an inner electrode (10) is embedded into said layer (8). The number of the electrically conductive layers comprising nanoparticles can be increased or decreased along the thickness of the body. The number of said layers can be important and useful to show the size of damage by increasing measurement sensitivity. In a more preferable form of this embodiment of the invention, an insulating layer (6) is formed in a desired thickness with a body material on the electrically conductive composite layer (8) comprising nanoparticles. A second conductive composite layer (7) is formed on the insulating layer (6), which is formed with said body material, similar to the first composite layer (8) and again an inner electrode (9) is embedded into this layer (7).

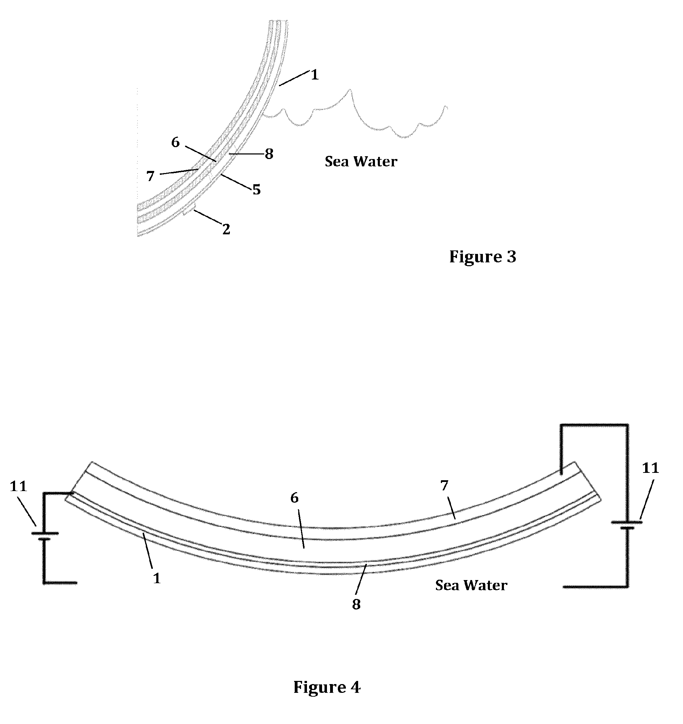

In an embodiment produced according to the invention, as shown in Figure 1, the number of said electrically conductive composite layers (7, 8) are two. According to this embodiment, final thickness of the body is formed by applying again a standard body material on the second composite layer (7) comprising nanoparticles. As shown in Figure 3, after completion of manufacture of the marine vehicle, the outer electrode (2) which may be in gelcoat layer (1) and/or in the outer insulating layer (5) is left in the sea. DC or AC voltage is applied individually to other inner electrodes (9, 10). Electrical resistance will be maximum when it is measured because there is no conductivity between these electrodes (9, 10). As shown in Figure 3, in case of a possible minor damage (3), the resistance value is decreased because electrical current is occurred between the electrodes 2 and 10. When said current is occurred between the electrodes 2 and 9 it provides information about the presence and size of the damage. In case of a deeper and heavy damage (4), a bigger resistance value will be measured between the electrodes 2 and 9, and a smaller resistance value will be measured between the electrodes 2 and 10. When the difference between these measured resistances is decreased, it will be understood that the damage is bigger, since the damaged area provides conductivity within a deeper culvert because of the conductivity of the sea water. In this case, the information about the size of the damage is obtained besides the information of that the marine vehicle is damaged. In case of a possible damage (4) which would be occurred alone, the resistance difference will be occurred between the electrodes 2, 9 and 2, 10, therefore, again the information of that the body of the marine vehicle is damaged and the information of the size of this damage is obtained.

Electrical current value between the electrodes (2-9, 2-10) is measured easily between two ends, and this current change is monitored in real time by means of a developed control unit. When the current and resistance values reach to a critical value as the resistance value is measured continuously, a warning is sent to the user by means of a control unit based on said measured value of the resistance. In this context, the system of the present invention comprises a circuitry formed between the body and/or the parts of the composite marine vehicle body. A power is applied continuously throughout the body of the vehicle by providing a power supply (11) in this circuit. This power can be supplied from accumulator of the vehicle. It is advantageous that said power supply (11) is a "constant current generator" for the sake of obtaining instantly correct measurements. It is also possible to measure the current instead of the resistance because the current flowing throughout the circuit is inversely proportional to the resistance of the circuit. The deformation degree on the marine vehicle is determined by comparing the measured current or resistance value with the predetermined threshold value. An electrical signal produced by the control unit is sent to a warning means (not shown) when the current value exceeds the threshold value or when the resistance value falls below the threshold value. The control unit is preferably connected to said power supply (11). It is advantageous to carry out the measurements at more than one current and/or resistance value for obtaining reliable results because of the deformations depending on loads and time dependent deformations on the marine vehicle.

The control unit of the present invention is designed such that it warns the user of a breakdown or damage with a warning means. Said warning means may be in the form of a message to a cell phone, a warning light, a warning voice, etc.

The present system can be integrated to the navigation system of the vehicle. It is possible to protect the life of passengers and property by means of the present method which prevents complete damage of the marine vehicle.

The present system can also be used for predetermination of damage in the parts of the marine vehicles such as body, rudder frame, centerboard, etc. manufactured with composite materials. When the composite parts of the marine vehicles are produced, the first resistance value of the part is measured and recorded and as long as the part runs in normal working conditions and is damaged, its conductivity increases because the salty water leaks into the damaged part. As a result of this increase in electrical conductivity, the resistance of composite parts of the marine vehicle decreases compared to its first resistance and it is understood that there is a damage in the parts and/or body of the marine vehicle. An electronic circuit (not shown) mounted in the marine vehicle, detecting a damage availability, can be arranged such that it sends this information wirelessly with the help of an electronic control unit to the user or the relevant maritime safety departments.

## Claims

1. A damage assessment system for use in marine vehicles comprising;
- a composite layer (8) comprising fibers mixed with a polymeric resin having electrically conductive nanoparticles,
- at least one inner electrode (10) embedded in said composite layer (8),
- at least one insulating layer (5) on said composite layer (8),
- at least one outer electrode (2) embedded in this insulating layer (5) or in a final layer (1) thereon, which is positioned in an area where the marine vehicle is in contact with the water,
- a power supply (11) connected to said outer electrode (2) and the inner electrode (10),
- a control unit measuring the resistance and/or current between said inner electrode (10) and the outer electrode (2), and generating an electrical signal in case of that said unit measures a resistance value below a predetermined threshold resistance value, or a current value above a predetermined threshold electrical current value, and
- a warning means converting the electrical signal generated by the control unit into a warning signal.

2. A damage assessment system according to claim 1, wherein said damage assessment system further comprises at least another conductive composite layer (7) under said conductive composite layer (8) whereby at least an insulating layer (6) is provided which ensures electrical insulation between said conductive layers (7,8).

3. A damage assessment system according to claim 2, wherein said additional composite layer (7) comprises at least an inner electrode (9) whereby said inner electrode (9) and the outer electrode (2) are connected electrically with a power supply (11).

4. A damage assessment system according to claim 1, wherein said final layer (1) is a gelcoat layer.

5. A damage assessment system according to claim 1, wherein said nanoparticles having electrical conductivity are selected from a group consisting of carbon fiber, carbon nanotube and graphite.

6. A damage assessment system according to claim 1, wherein said polymeric resin is selected from a polyester, epoxy and vinyl ester resin.

7. A damage assessment system according to claim 1, wherein said fiber fabric is selected between glass fiber and kevlar.

8. A damage assessment system according to claim 1, wherein said power supply (11) is a constant current generator.

9. A method for manufacturing of the damage assessment system according to claim 1 comprising the steps of;
- homogenizing nanoparticles having electrical conductivity in a polymeric resin,
- producing a composite material by way of applying the so formed mixture to a fiber material,
- forming at least an electrically conductive composite layer (8) by way of applying said composite material to the marine vehicle,
- embedding at least an inner electrode (10) into said layer (8),
- producing an insulating layer (5) by applying of an insulating polymeric matrix material on said coating (8),
- embedding at least an outer electrode (2) into said insulating layer (5) or into a final layer (1) which may optionally be applied thereon,
- connecting a power supply (11) so as to generate a circuit between the electrode (10) in the electrically conductive composite layer (8) and said outer electrode (2),
- connecting a control unit measuring the resistance and/or current of the circuit and generating an electrical signal when said resistance as measured is below a predetermined threshold value or said current as measured is above a predetermined threshold electrical current value, and
- providing a warning means generating a warning signal based on an electrical signal generated by said control unit.

10. A method for manufacturing of a marine vehicle comprising a damage assessment system according to claim 1 comprising the steps of;
- applying a polymeric matrix material which constitutes an insulating layer (5) onto a marine vehicle mold wherein a final layer (1) material is preferably applied onto the mold before applying the polymeric matrix material,
- embedding at least an outer electrode (2) into said final layer (1) and/or the insulating layer (5) in an area wherein the marine vehicle gets into contact with water,
- homogenizing electrically conductive nanoparticles in a polymeric resin, forming a composite material by means of applying the so formed mixture into a fiber material, and forming at least a composite layer (8) whose electrical conductivity is obtained by way of applying said composite material onto the marine vehicle,
- embedding at least an electrode (10) into said composite layer (8),
- connecting a power supply (11) so as to form a circuit between the electrode (10) in the electrically conductive composite layer (8) and said outer electrode (2),
- connecting a control unit for measuring the resistance and/or current of the circuit and generating an electrical signal when the resistance measured is below a predetermined threshold value or the current measured is above a predetermined threshold electrical current value, and
- providing a warning means generating a warning signal based on an electrical signal generated by said control unit.

11. A method according to claim 9 or 10, wherein said method further comprises the steps of; forming another conductive composite layer (7) after forming the composite layer (8) and embedding at least an electrode (9) into this layer, and forming at least an insulating layer (6) between said conductive layers (7, 8) in order provide electrical insulation between the same.

12. A method according to claim 10 or 11, wherein said method comprises use of at least one of the methods of hand lay-up method, wet lay-up method, spraying method, vacuum infusion method, and vacuum bagging method in manufacturing of the conductive composite layers (7, 8).

13. A method according to claim 10 or 11, wherein said nanoparticles having electrical conductivity are selected from a group consisting of carbon fiber, carbon nanotube and graphite.

14. A method according to claim 10 or 11, wherein said polymeric resin is selected from a polyester, epoxy and vinyl ester resin.

15. A method according to claim 10 or 11, wherein said fiber fabric is selected from glass fiber and kevlar.
